(19) **Europäisches Patentamt**

**European Patent Office**

**Office européen des brevets**

(11) Veröffentlichungsnummer: **0 071 066**
**B1**

(12) **EUROPÄISCHE PATENTSCHRIFT**

(45) Veröffentlichungstag der Patentschrift:
**04.12.85**

(21) Anmeldenummer: **82106216.3**

(22) Anmeldetag: **12.07.82**

(51) Int. Cl.⁴: **F 16 K 3/08, F 16 K 3/34**

(54) Mengenregulierventil.

(30) Priorität: **14.07.81 DE 3127738**

(43) Veröffentlichungstag der Anmeldung:
**09.02.83 Patentblatt 83/6**

(45) Bekanntmachung des Hinweises auf die Patenterteilung:
**04.12.85 Patentblatt 85/49**

(84) Benannte Vertragsstaaten:
**AT BE CH DE FR GB IT LI LU NL SE**

(56) Entgegenhaltungen:
**EP - A - 0 035 056**
**DE - A - 3 031 380**
**FR - A - 2 415 765**
**FR - A - 2 475 680**

(73) Patentinhaber: **FRIEDRICH GROHE ARMATURENFABRIK GmbH & CO, Hauptstrasse 137, D-5870 Hemer 1 (DE)**

(72) Erfinder: **Pawelzik, Manfred, Herringser Weg 5a, D-4770 Soest (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Mengenregulierventil mit den im Oberbegriff des Anspruchs 1 angegebenen Merkmalen. Derartige Ventileinrichtungen sind bekannt und werden insbesondere bei Sanitärarmaturen verwendet, wobei das Gehäuse der Ventileinrichtung vorgegebenen Standardabmessungen im Hinblick auf den Einsatz in beliebige Sanitärarmaturen entsprechen muß. Die Abmessungen der in dem Gehäuse gelagerten Ventilscheiben und ihre Durchströmöffnungen müssen daher relativ klein gehalten werden. Außerdem beträgt bei diesen Ventilen der Stellwinkel von der Schließstellung bis zur Offenstellung in der Regel 90°, vereinzelt 180° bzw. eine viertel oder halbe Umdrehung des Handgriffs.

Aufgrund der vorstehenden Bedingungen zeigen die bekannten Ventile meist ein Öffnungsverhalten, bei dem in der ersten Hälfte des Öffnungsdrehwinkels nahezu die maximale Durchflußleistung erreicht wird, während in der zweiten Hälfte kaum noch eine Steigerung der Durchflußleistung feststellbar ist.

Aus der älteren Patentanmeldung EP-A-0 035 056 ist ferner eine Ventileinrichtung bekannt geworden, bei der den Ventilscheiben ein simultan wirkendes Hilfsventil zur Drosselung des durchströmenden Wassers im Bereich der Ventilscheiben zugeordnet ist, womit Kavitation und Geräuschentwicklung unterbunden werden soll.

Der Erfindung liegt daher die Aufgabe zugrunde, das im Oberbegriff des Anspruchs 1 beschriebene Ventil hinsichtlich seines Durchflußverhaltens zu verbessern.

Diese Aufgabe wird erfindungsgemäß mit den im kennzeichnenden Teil des Anspruchs 1 angegebenen Merkmalen gelöst. Weitere Ausgestaltungen der Erfindung sind in den Ansprüchen 2 und 3 aufgeführt.

Mit diesen erfindungsgemäßen Maßnahmen wird bei dem Ventil, bezogen auf den Drehwinkel, eine relativ flache bzw. einen Sattel aufweisende Durchflußleistungskurve erreicht, die sich etwa über den gesamten Öffnungsdrehwinkel erstreckt. Eine Drosselung erfolgt hierbei nur im mittleren Ventilöffnungsbereich.

Bei einem Ventil mit einer derartigen Durchflußcharakteristik kann günstig durch eine Verringerung des Stellwinkels, z. B. durch Aufsetzen eines zusätzlichen Anschlags, eine Leistungsreduzierung wahlweise durchgeführt werden, so daß eine Ventilausführung sowohl in eine hohe Durchflußleistung erfordernden sanitären Badebatterien als auch in wesentlich geringere Durchflußleistungen erfordernden Waschtischbatterien eingesetzt werden kann.

Ein Ausführungsbeispiel der Erfindung ist in der Zeichnung dargestellt und wird im folgenden näher beschrieben. Es zeigt

Fig. 1 ein Mengenregulierventil im Längsschnitt;

Fig. 2 das Mengenregulierventil gemäß Fig. 1 um 90° gedreht in Seitenansicht;

Fig. 3 einen Schnitt in der Ebene I der Fig. 1 bei geschlossenem Ventil;

Fig. 4 einen Schnitt in der Ebene I der Fig. 1 bei einem Öffnungswinkel von 75°;

Fig. 5 einen Schnitt in der Ebene I der Fig. 1 bei einem Öffnungswinkel von 90°;

Fig. 6 einen Schnitt in der Ebene I der Fig. 1 bei einem Öffnungswinkel von 180°;

Fig. 7 eine graphische Darstellung der Durchflußleistung in Abhängigkeit vom Stellwinkel des Ventils.

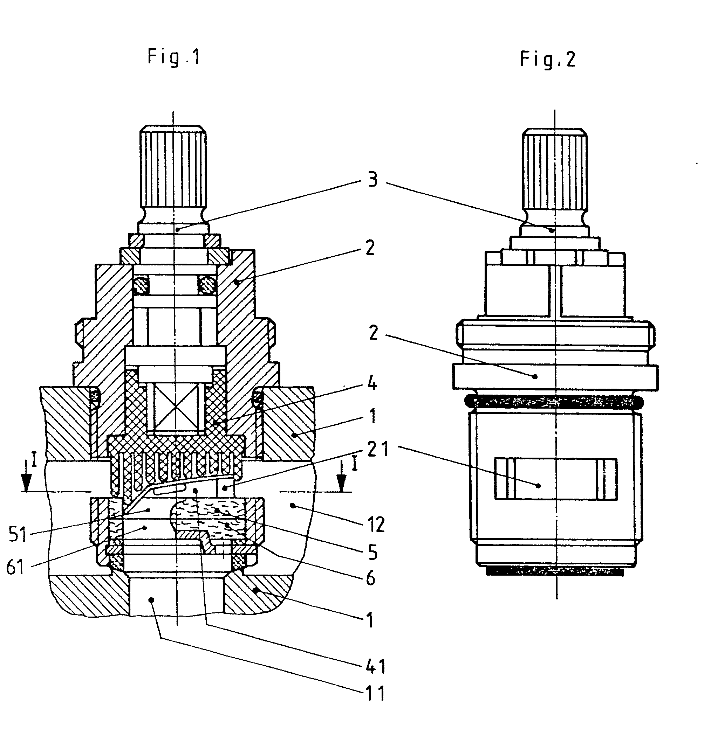

Das Mengenregulierventil ist in einem Gehäuse 2 angeordnet. Das Gehäuse 2 ist gemäß Fig. 1 in einem Armaturenkörper 1 eingeschraubt. Stirnseitig ist es mit einem Zulaufkanal 11 und über radiale Auslaßöffnungen 21 in dem zylindrischen Gehäuse 2 mit einem Ablaufkanal 12 in dem Armaturenkörper 1 verbunden.

Quer zur Längsachse ist stromaufwärts zunächst eine drehfest im Gehäuse 2 gehalterte Ventilsitzscheibe 6 mit einer Durchtrittsöffnung 61 vorgesehen, an der eine drehbar gehalterte Ventilregulierscheibe 5 mit ebenfalls einer Durchtrittsöffnung 51 stromabwärts angelagert ist. Die Ventilregulierscheibe 5 wird dabei von einem im Gehäuse 2 abgestützten und drehbar gelagerten Halteglied 4 aufgenommen, wobei das Halteglied 4 mittels einer koaxial im Gehäuse 2 gelagerten Ventilspindel 3 begrenzt verdrehbar ist. Die Ventilspindel 3 ist dabei mit einem Endbereich aus dem Gehäuse 2 herausgeführt und trägt Mittel für die Aufnahme eines Haltegriffs etc. (in der Zeichnung nicht dargestellt) für die Ventilbetätigung. Zwischen dem Halteglied 4 und der Ventilregulierscheibe 5 ist ein Freiraum ausgebildet, in dem Einrichtungen zur Fließgeräuschminderung angeordnet sind und eine Umlenkung des Mediums erfolgt.

Zur drehfesten Verbindung des Halteglieds 4 mit der Ventilregulierscheibe 5 sind zwei gegenüberliegende, im Wandungsbereich axial vorragende Haltenocken 41 an dem Halteglied 4 angeformt. Die Haltenocken haben eine entsprechend der zylindrischen Aufnahmebohrung im Gehäuse 2 geformte äußere Mantelfläche 411. Im Bereich der Haltenocken 41 sind ebenfalls gegenüberliegend in der Wandung des Gehäuses 2 radiale Auslaßöffnungen 21 ausgebildet.

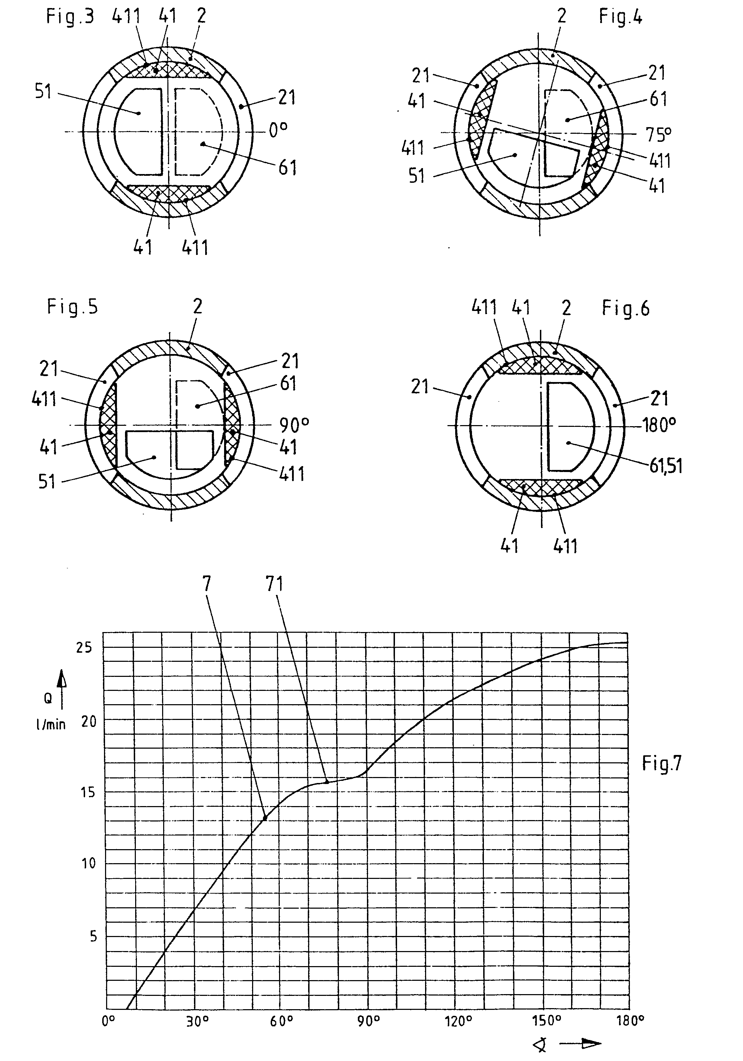

Wie insbesondere den Fig. 3 bis 6 zu entnehmen ist, sind die Haltenocken 41 und die Auslaßöffnungen 21 so bemessen, daß die Auslaßöffnungen 21 insbesondere im mittleren Stellwinkelbereich gedrosselt werden, so daß eine, bezogen auf den Stellwinkel, relativ flach ansteigende Durchflußleistung erzielbar ist.

In der Fig. 7 ist die durch diese Anordnung erzielbare Durchflußleistung graphisch dargestellt. Auf der Abszisse ist hierbei der Stellwinkel in Grad und auf der Ordinate die Durchflußleistung in Liter pro Minute angegeben, wobei die Leistungskurve 7 die jeweilige Durchflußleistung anzeigt. Fig. 3 zeigt hierbei die geschlossene Ventilstellung an, d. h. die Durchtrittsöffnung 61 befindet sich um 180° verdreht zur Durchtrittsöffnung 51 und sperrt den Durchfluß völlig ab,
während die Haltenocken 41 die Auslaßöffnungen 21 freigeben.

Fig. 4 zeigt einen Stellwinkel von 75°, wo eine
zunehmende Drosselung der Durchflußmenge
durch die Haltenocken 41 im Bereich der Auslaßöffnungen 21 erfolgt.

In der Fig. 5 ist eine 90°-Ventilstellung gezeigt,
in der die Durchflußmenge im wesentlichen
durch die Haltenocken 41 und die Auslaßöffnungen 21 bestimmt wird.

In Fig. 6 ist schließlich die voll geöffnete Stellung gezeigt. In dieser Betriebsstellung gelangen
die beiden Durchtrittsöffnungen 51, 61 völlig zur
Deckung und die Auslaßöffnungen 21 werden
völlig von den Haltenocken 41 freigegeben, so
daß die größtmögliche Durchflußleistung erfolgt.

Vorteilhaft kann in dem Sattelbereich 71 der
Kurve 7 etwa bei einem Drehwinkel von 90°
durch den Einsatz eines weiteren Anschlags eine
Leistungsreduzierung erzielt werden, so daß neben der maximalen Durchflußleistung für Anwendungszwecke, bei denen geringere Durchflußleistungen benötigt werden, z. B. bei Waschtischarmaturen, insgesamt eine Ventilausbildung eingesetzt werden kann.

Selbstverständlich kann anstatt der ohnehin
erforderlichen Haltenocken an dem Halteglied
auch ein zylindrischer, hülsenartiger Fortsatz angeformt werden, in dem bzw. sowohl in dem hülsenartigen Fortsatz als auch in der Wandung des
Gehäuses eine oder mehrere, entsprechend der
gewünschten Durchflußleistungsänderung geformte Durchtrittsöffnungen ausgebildet werden, so daß, bezogen auf den Stellwinkel des
Ventils, beliebige Leistungskurven erzielbar
sind.

**Patentansprüche**

1. Mengenregulierventil, insbesondere für Sanitärarmaturen, mit einem axiale Einlaß- und radiale Austrittsöffnungen (21) aufweisenden, in
Armaturen (1) einsetzbaren Gehäuse (2), in dem
quer zur Längsachse eine mit wenigstens einer
Durchtrittsöffnung (61) versehene Ventilsitzscheibe (6) unverdrehbar gehaltert ist und an der
eine ebenfalls mit wenigstens einer Durchtrittsöffnung (51) versehene, von einem koaxialen
Halteglied (4) aufgenommene und mit einer Ventilspindel (3) drehbare Ventilregulierscheibe (5)
anliegt, dadurch gekennzeichnet, daß das Halteglied (4) mit einem oder mehreren Fortsätzen
den radialen Austrittsöffnungen (21) im Gehäuse
(2) derart zugeordnet ist, daß im mittleren Ventilöffnungsbereich (Fig. 4, 5) die Durchflußleistung
im wesentlichen vom lichten Querschnitt der
Austrittsöffnungen (21) bestimmt ist, während
am Beginn (Fig. 3) und am Ende (Fig. 6) des Ventilöffnungsvorgangs die Durchflußleistung vom
lichten Querschnitt der Durchtrittsöffnungen (61,
51) der Ventilsitzscheibe (6) und der Ventilregulierscheibe (5) bestimmt ist.

2. Mengenregulierventil nach Anspruch 1, dadurch gekennzeichnet, daß die an dem Halteglied (4) ausgebildeten Haltenocken (41) für die
Ventilregulierscheibe (5) mit ihren äußeren Mantelflächen (411) im mittleren Ventilöffnungsbereich den Durchtrittsquerschnitt der Austrittsöffnungen (21) bestimmen.

3. Mengenregulierventil nach Anspruch 2, dadurch gekennzeichnet, daß die Mantelflächen
(411) so bemessen sind, daß in dem mittleren
Ventilstellbereich über einen Drehwinkel von ca.
20° eine unterproportionale bzw. nur geringfügig
ansteigende Durchflußleistung erfolgt.

**Claims**

1. Flow-regulating valve, especially for sanitary fittings, having a housing (2) that can be
inserted into fittings (1), which housing has axial
inlet openings and radial outlet openings (21)
and in which, transverse to the longitudinal axis,
a valve seat disc (6) provided with at least one
throughflow opening (61) is held in a non-rotatable manner, this disc supporting a valve-regulating disc (5) that is likewise provided with at
least one throughflow opening (51), is held by a
coaxial retaining member (4) and can be turned
with a valve spindle (3), characterised in that the
retaining member (4) with one or more extension
pieces is associated with the radial outlet openings (21) in the housing (2) in such a manner that
in the central valve opening region (Fig. 4 and 5)
the rate of flow is determined substantially by
the internal cross-section of the outlet openings
(21), whilst at the beginning (Fig. 3) and at the
end (Fig. 6) of the valve opening operation the
rate of flow is determined by the internal cross-
section of the throughflow openings (61, 51) in
the valve seat disc (6) and the valve-regulating
disc (5).

2. Flow-regulating valve according to claim 1,
characterised in that the outer surfaces (411) of
the retaining lugs (41), which are constructed on
the retaining member (4), for the valve-regulating disc (5) determine the throughflow cross-
section of the outlet openings (21) in the central
valve opening region.

3. Flow-regulating valve according to claim 2,
characterised in that the outer surfaces (411) are
so dimensioned that over a rotational angle of
approximately 20° in the central valve setting region a less than proportionately or only slightly
increasing rate of flow is effected.

**Revendications**

1. Vanne de régulation de débit, notamment
pour robinetteries sanitaires, avec un boîtier (2)
susceptible d'être mis en place sur les robinetteries (1) et comportant un orifice axial d'entrée et
des orifices radiaux de sortie (21), boîtier dans
lequel est maintenu transversalement par rapport à l'axe longitudinal, sans pouvoir tourner, un disque de siège de vanne (6) muni d'au moins un orifice de passage (61), et contre lequel s'applique, en étant saisi par un organe co-axial de maintien (4) et en étant susceptible de tourner sous l'action d'un axe de vanne (3), un disque de régulation de vanne (5) muni également d'au moins un orifice de passage (51), vanne caractérisée en ce que l'organe de maintien (4) est associé, par un ou plusieurs prolongements, aux orifices radiaux de sortie (21) dans le boîtier (2) de sorte que, dans la zone médiane d'ouverture de la vanne (figures 4, 5) le débit d'écoulement est essentiellement déterminé par la section transversale libre des orifices de sortie (21), tandis qu'au début (figure 3) et à la fin (figure 6) du processus d'ouverture de la vanne, le débit d'écoulement est déterminé par la section transversale libre des orifices de passage (61, 51) du disque de siège de vanne (6) et du disque de régulation de vanne (5).

2. Vanne de régulation de débit selon la revendication 1, caractérisée en ce que les cames de maintien (41) ménagées sur un organe de maintien (4) pur le disque de régulation de vanne (5) déterminent, par leurs surfaces enveloppes externes (411), la section transversale de passage des orifices de sortie (21) dans la zone d'ouverture médiane de la vanne.

3. Vanne de régulation de débit selon la revendication 2, caractérisée en ce que les surfaces enveloppes (411) sont dimensionnées de façon que, dans la zone médiane de réglage de la vanne, sur un angle de rotation d'environ 20°, on obtienne un débit d'écoulement sous proportionnel ou bien n'augmentant que très légèrement.

Fig.1

Fig.2

Fig.3

Fig.4

Fig.5

Fig.6

Fig.7